# EUROPÄISCHE PATENTSCHRIFT

(11) **EP 2 175 209 B1**
(45) Veröffentlichungstag und Bekanntmachung des Hinweises auf die Patenterteilung: **12.09.2012**
(21) Anmeldenummer: 08017636.5
(22) Anmeldetag: 08.10.2008
(51) Int. Cl.: F24H 8/00

(54) **Brennwert-Heizgerät**
Calorific value heater
Appareil de chauffage à valeur combustible

(43) Veröffentlichungstag der Anmeldung: 14.04.2010
(73) Patentinhaber: Wunsch, Horst, 8597 Landschlacht (CH)
(72) Erfinder: Wunsch, Horst, 8597 Landschlacht (CH)
(74) Vertreter: Hess, Peter K. G.

(56) Entgegenhaltungen:
- EP-A- 0 926 439
- EP-A- 1 398 579
- DE-A1- 1 812 361
- DE-U1- 9 105 119

## Beschreibung

### 1. Gebiet der Erfindung

Die vorliegende Erfindung betrifft ein Brennwert-Heizgerät mit einer besonderen Abgasführung und Kondensatabführung in die Steigleitung eines Kamins.

### 2.Stand der Technik

Brennwert-Heizgeräte sind aus Stand der Technik bekannt und für Öl und Gas verfügbar. Üblicherweise sind derartige Brennwert-Heizgeräte wandhängend montiert und weisen an ihrem oberen Ende einen Auslass für das Abgas auf, der über eine steigende Leitung zu der Steigleitung eines Kamins führt. Das bei der Brennwerttechnik anfallende Kondensat wird in einer Kondensatwanne gesammelt und über einen Siphon und eine Kondensatleitung einer Neutralisation zugeführt. Derartige Brennwert-Heizgeräte sind aus der EP 1 398 579 A1 und der EP 0 926 439 A2 bekannt und zeigen einen von der Abgasführung separaten Auslass für das anfallende Kondensat.

Aus der DE 42 37 134 A1 ist eine Einrichtung mit einem Abgasrohr bekannt, bei der mehrere Brennwert-Heizgeräte an einem gemeinsamen, mehrere Geschosse eines Gebäudes durchsetzenden Abgasrohr angeschlossen sind. Hierbei werden ausschließlich die Abgase der Brennwert-Heizgeräte in die Steigleitung des Kamins eingeleitet. Das Kondensat jedes Brennwert-Heizgerätes wird über einen Siphon in ein gemeinsames Fallrohr eingeleitet und einer Neutralisation zugeführt.

In der DE 10 2005 003 868 A1 wird vorgeschlagen das abzuführende Kondensat mittels einer Kondensatpumpe auf ein gewünschtes Niveau oberhalb des Gerätes zu heben und in die Abgasleitung zwischen Brennwert-Heizgerät und Steigleitung des Kamins einzuleiten.

Der Nachteil dieser obigen Lösungen besteht darin, dass entweder eine separate Zuführung für das Kondensat zur Steigleitung des Kamins vorgesehen sein muss oder alternativ eine Kondensatpumpe vorgesehen sein muss, die das Kondensat, welches sich schwerkraftbedingt in der Kondensatwanne ansammelt, zu der Abgasleitung zugeführt werden muss, die oben aus dem Brennwert-Heizgerät austritt. Da das Kondensat hauptsächlich aus schwefeliger Säure und Schwefelsäure besteht, sind die Kondensatpumpen säurefest auszubilden und daher vergleichsweise teuer und wartungsanfällig.

Weiterhin sind derartige wandhängende Brennwert-Heizgeräte schwer zu installieren, da mehrere Anschlüsse an den Kamin und für neutralisiertes Kondensat an das Abwassersystem vorgesehen werden müssen. Auch ist für den Kaminkehrer der Zugang zur Revisionsöffnung des Kamins mühsam, da der Kaminanschluss nur über Leitern etc. erreichbar ist.

Es ist daher die Aufgabe der vorliegenden Erfindung ein Brennwert-Heizgerät mit Abgasvohrleitung bereitzustellen, welches die oben genannten Nachteile nicht mehr aufweist und das insbesondere einfacher an einen Kamin angeschlossen werden kann. Weiterhin soll das Brennwert-Heizgerät kostengünstiger ausgeführt werden und die Montage, Wartung und Servicefreundlichkeit eines Brennwert-Heizgerätes soll erhöht werden.

### 3. Zusammenfassung der Erfindung

Die oben genannten Aufgaben werden gelöst durch ein Brennwert-Heizgerät mit Abgasvorrichtung gemäß Anspruch 1 sowie ein System aus mindestens einem Brennwert-Heizgerät und einem Kamin gemäß Anspruch 8.

Insbesondere werden die oben genannten Aufgaben gelöst durch ein Brennwert-Heizgerät mit Abgasvorrichtung aufweisend einen Ventilator zur Zufuhr von Verbrennungsluft zu dem Heizkessel, eine Kondensatwanne mit einem nach unten mündenden Auslass, wobei der Auslass gleichzeitig Auslass für anfallendes Kondensat als auch Auslass für Abgase ist und eine fallend angeordnete Rohrleitung zwischen dem Auslass der Kondensatwanne und einer Steigleitung eines Kamins für die gemeinsame Abgas- und Kondensatführung vom Brennwert-Heizgerät zum Kamin.

Dadurch, dass der Auslass der Kondensatwanne gleichzeitig als Auslass für anfallendes Kondensat als auch als Auslass für die Abgase benutzt wird und von dort aus eine Rohrleitung fallend zur Steigleitung eines Kamins führt, kann sowohl auf einen Siphon als auch auf eine Kondensatpumpe verzichtet werden. Abgas und Kondensat werden über die gemeinsame Rohrleitung der Steigleitung eines entsprechenden Kamins zugeführt. Das Kondensat läuft dabei schwerkraftbedingt durch die fallend angeordnete Rohrleitung in die Steigleitung des Kamins, wodurch es zusammen mit dem im Kamin anfallenden Kondensat und dem Kondensat weiterer Brennwert-Heizgeräte einer gemeinsamen Neutralisation zugeführt wird.

Da dem Heizkessel die Verbrennungsluft mittels eines Ventilators zugeführt wird, entsteht in dem Heizkessel ein Überdruck an Verbrennungsgas, welches ebenfalls durch die fallend angeordnete Rohrleitung in den Kamin geblasen wird. Eine steigende Zuführung bzw. eine Zuführung über das obere Ende des Brennwert-Heizgerätes - die bei älteren Anlagen für einen thermischen Auftrieb (Zug) notwendig war - ist nicht mehr notwendig. Somit kann für Abgas und Kondensat die gleiche Rohrleitung zum Kamin verwendet werden.

Das Brennwert-Heizgerät kann dadurch sehr kostengünstig ausgeführt werden und weist auch weitere technische Vorteile auf. Durch den Wegfall des Siphons kann dieser nicht trocken fallen, genauso wenig kann eine Kondensatpumpe durch das sauere Kondensat zerstört werden. Am Kamin muss lediglich ein einziger Anschluss vorhanden sein. Ein Anschluss für Abwasser, oder gar eine eigene Leitung für Kondensat kann eingespart werden.

Weiterhin ergibt sich insbesondere bei wandhängenden Geräten der Vorteil, dass die Rohrleitung zwischen Brennwert-Heizgerät und Kamin an der Unterseite des Geräts austritt und damit sehr leicht zugänglich ist. Dadurch werden Prüf- und Revisionsvorgänge sehr erleichtert.

Weiterhin wird eine interne Abgasführung, die bei Brennwert-Heizgeräten nach dem Stand der Technik von der Kondensatwanne nach oben führt, ebenfalls eingespart werden. Insgesamt kann damit das Brennwert-Heizgerät kleiner ausgeführt werden oder bei gleicher Größe kann es für eine höhere Leistung ausgelegt werden. Damit kann das Brennwert-Heizgerät auch besser in Möbel, wie beispielsweise Küchenschränke oder Dielenschränke, integriert werden.

Durch die gemeinsame Nutzung der Steigleitung im Kamin zur Kondensatabführung bei mehreren an den Kamin angeschlossenen Brennwert-Heizgeräten braucht das gesamte System lediglich einen Siphon am Kaminsockel zum Auffangen des Kondensats und zum Weiterleiten an eine Neutralisationsbox. Ein gemeinsamer Siphon fällt weniger schnell trocken als ein Siphon an jedem Brennwert-Heizgerät, da insgesamt mehr Kondensat anfällt. In das Kaminrohr eindringender Regen und Schnee hilft ebenfalls ein Trockenfallen des Siphons zu vermeiden.

In einer bevorzugen Ausführungsform weist die Rohrleitung ein Gefälle von 1° bis 10°, bevorzugt 2° bis 5° und noch bevorzugter im Wesentlichen 3° auf. Dadurch ist ein sicherer schwerkraftbedingter Ablauf des Kondensats zu der Steigleitung des Kamins gewährleistet. Dadurch läuft auch Kondensat ab, wenn das Brennwert-Heizgerät ausgeschaltet ist und dessen Ventilator nicht mehr arbeitet.

In einer weiteren bevorzugen Ausführungsform ist die Kondensatwanne im Wesentlichen symmetrisch geformt und der Auslass für Kondensat und Abgas ist im Wesentlichen zentrisch in der Kondensatwanne angeordnet. Dadurch ist die Kondensatwanne einfacher zu fertigen und die Strömungsverhältnisse durch den Brennraum bzw. den nachgeschalteten Wärmetauscher sind sehr homogen. Dadurch kann die Wärmeeffizienz des Brennwert-Heizgerätes weiter verbessert werden.

In einer weiteren bevorzugten Ausführungsform läuft das Kondensat direkt ohne einen Siphon und ohne eine Kondensatpumpe in die Steigleitung des Kamins. Ein Siphon am Auslass des Brennwert-Heizgerätes sowie eine Kondensatpumpe werden eingespart.

In einer weiteren bevorzugten Ausführungsform bestehen die Kondensatwanne und die fallend angeordnete Rohrleitung aus einem säurebeständigen Kunststoff bevorzugt PVDF. Dadurch sind Kondensatwanne und Rohrleitung besonders resistent gegen das anfallende saure Kondensat und weisen eine hohe Lebensdauer auf.

In einer bevorzugten Ausführungsform weist das Brennwert-Heizgerät weiterhin mindestens eine Rückstromsperre für die Zuluft zur Verhinderung der Vermischung von Abgas und Zuluft bei abgeschaltetem Brennwert-Heizgerät auf. Die Rückstromsperre verhindert, dass Abgas von anderen, am gleichen Kaminrohr angeschlossenen Brennwert-Heizgeräten bei einem abgeschalteten Brennwert-Heizgerät aus der Öffnung für die Frischluftzufuhr austreten kann.

In einer weiteren bevorzugten Ausführungsform wird an einem Überdruckventil anfallendes Wasser aus dem Heizkreislauf in die Kondensatwanne und/oder die fallende Rohrleitung eingeleitet und in die Steigleitung des Kamins abgeführt. Brennwert-Heizgeräte weisen üblicherweise ein Überdruckventil auf, bei dem bei einem zu hohen Druck Wasser aus dem Heizkreislauf austreten kann. Dieses Wasser wird wiederum durch einen Siphon aufgefangen und der Kanalisation zugeführt. Durch die fallend angeordnete Rohrleitung ist es nun möglich dieses am Überdruckventil gegebenenfalls austretende Wasser ebenfalls in die Steigleitung des Kamins einzuleiten. Dadurch kann weiterer Installationsaufwand und insbesondere ein Anschluss des Brennwert-Heizgerätes an die Abwasserleitungen eingespart werden.

Die oben genannten Aufgaben werden ebenfalls gelöst durch ein System aus mindestens einem Brennwert-Heizgerät gemäß den obigen Ausführungsformen und einem Kamin, wobei der Kamin eine Steigleitung aus einem säurebeständigen Kunststoffmaterial aufweist und als Gegenstrom-Wärmetauscher zur Erwärmung der Zuluft des Brennwert-Heizgeräts ausgeführt ist. Dadurch wird die Zuluft durch kondensierende Abgase vorgewärmt, wobei die im Abgas vorhandene Wärmeenergie zurückgewonnen wird.

In einer weiteren bevorzugten Ausführungsform weist das System einen gemeinsamen Siphon für das Kondensat aller an die Steigleitung angeschlossenen Brennwert-Heizgeräte auf, wobei der Siphon am unteren Ende der Steigleitung angeordnet ist. Über diesen gemeinsamen Siphon wird das in den Brennwert-Heizgeräten anfallende Kondensat sowie das in der Steigleitung des Kamins zusätzlich anfallende Kondensat gemeinsam aufgefangen und der Neutralisation zugeführt.

### 4. Kurze Beschreibune der Zeichnungen

Im Folgenden werden bevorzugte Ausführungsformen der Erfindung mit Bezug auf die Figuren beschrieben. In denen zeigt:
- Fig. 1: ein Brennwert-Heizgerät gemäß dem Stand der Technik mit Siphon und Auslauf von Kondensat und separatem Abgasrohr; und
- Fig. 2: ein erfindungsgemäßes Brennwert-Heizgerät mit gemeinsamer Leitung für Kondensat und Abgas.

### 5. Beschreibung der bevorzugten Ausführungsformen

Im Folgenden werden bevorzugte Ausführungsformen der Erfindung mit Bezug auf die Figuren beschrieben.

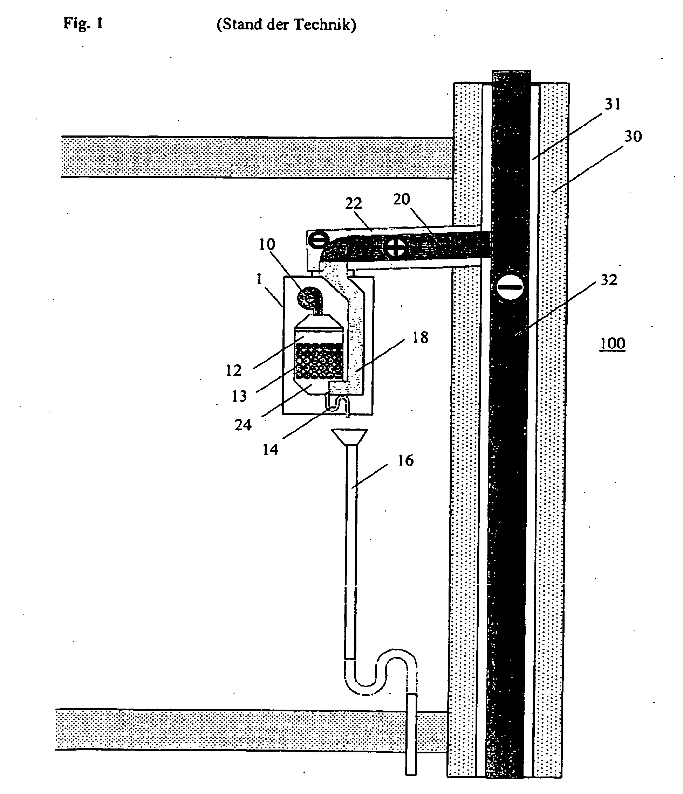

Fig. 1 zeigt ein Brennwert-Heizgerät 1 gemäß dem Stand der Technik. Das Brennwert-Heizgerät 1 nach dem Stand der Technik ist raumluftunabhängig und weist einen Ventilator 10 zur Zufuhr von Verbrennungsluft zu dem Heizkessel 12 auf. In dem Heizkessel ist weiterhin ein Wärmetauscher 13 angeordnet, der dem Verbrennungsgas zusätzlich Wärme entzieht und der Heizung zur Verfügung stellt. Anfallendes Kondensat wird in einer Kondensatwanne 24 gesammelt und über einen Siphon 14 einer Kondensatleitung 16 zugeführt, die zu einer Neutralisationsbox (nicht gezeigt) führt. In dieser Neutralisationsbox wird das saure Konzentrat mittels Kalkstein zu Gips und Wasser neutralisiert.

Die Abgase des Brennwert-Heizgeräts 1 nach dem Stand der Technik werden über eine interne Abgasführung 18 nach oben geführt und über ein steigend angeordnetes Rohr 20 einer Steigleitung 32 eines Kamins 30 zugeführt. Zuluft für die Verbrennung wird im Ringspalt 31 des Kamins angesaugt und durch die Restwärme des Abgases in der Steigleitung 32 vorgewärmt. Die Zuluft gelangt dann über einen Zuluftkanal 22 zu dem Brennwert-Heizgerät 1 wo sie von dem Ventilator 10 angesaugt wird und in den Heizkessel 12 eingeblasen wird.

Man erkennt aus dieser schematischen Darstellung eines Brennwert-Heizgerätes 1 gemäß dem Stand der Technik, dass es notwendig ist, für die Kondensatabfuhr und für die Abfuhr des Abgases unterschiedliche Leitungen zu verwenden. Weiterhin erkennt man, dass die Abgasleitung 20 und der Zuluftkanal 22 für den Installateur und Kaminkehrer schlecht erreichbar sind und daher einen hohen Montageaufwand und Wartungsaufwand erfordern. Schließlich sieht man, dass eine interne Abgasführung 18 vorgesehen sein muss, um das Abgas nach oben aus dem Brennwert-Heizgerät 1 zu leiten.

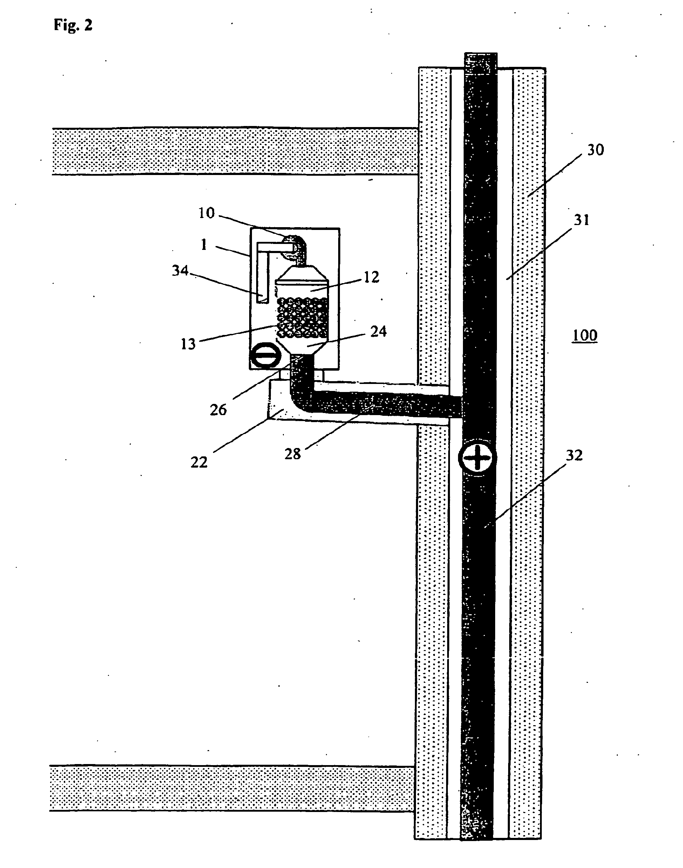

Diese Nachteile treten bei einem Brennwert-Heizgerät 1 gemäß der vorliegenden Erfindung nicht auf. Eine Ausführungsform eines erfindungsgemäßen Brennwert-Heizgerätes 1 ist in Fig. 2 dargestellt. Fig. 2 zeigt symbolisch ein Stockwerk mit einem Brennwert Heizgerät 1. Das Heizungssystem 100 kann jedoch mehrere Brennwert-Heizgeräte 1 umfassen, beispielsweise auf mehreren Stockwerken, die alle an den dargestellten gemeinsamen Kamin 30 angeschlossen sind.

Das Brennwert-Heizgerät 1 umfasst einen Ventilator 10 für die Zufuhr von Verbrennungsluft zu dem Heizkessel 12. Im Heizkessel 12 wird Wasser für die Heizung bzw. Brauchwasser in einem Wärmetauscher 13 erwärmt. Dabei anfallendes Kondensat wird in einer Kondensatwanne 24 gesammelt. Die Kondensatwanne 24 ist bevorzugt symmetrisch ausgebildet und weist einen Auslass 26 auf, der zentrisch in der Kondensatwanne 24 angeordnet ist. Durch diesen Auslass 26, der nach unten mündet, wird gleichzeitig sowohl Kondensat aus der Kondensatwanne 24 als auch die entstehenden Abgase abgeführt.

An den Auslass 26 ist eine fallend angeordnete Rohrleitung 28 angeschlossen, die das Brennwert-Heizgerät mit einer Steigleitung 32 eines Kamins 30 verbindet. Über diese fallend angeordnete Rohrleitung 28 werden gleichzeitig das Abgas und das im Brennwert-Heizgerät 1 anfallende Kondensat zur Steigleitung 32 geleitet. Zuluft zu dem Brennwert-Heizgerät 1 wird durch den Ringspalt 31 angesaugt und über einen Zuluftkanal 22 dem Brennwert-Heizgerät 1 zugeführt. Das erfindungsgemäße Brennwert-Heizgerät 1 kann daher grundsätzlich sowohl raumluftabhängig als auch raumluftunabhängig ausgeführt werden. Die Zuluft wird durch die Restwärme des Abgases in dem Kamin 30, der als Gegenstromwärmetauscher arbeitet, vorgewärmt.

Um zu verhindern, dass bei einem abgeschalteten Brennwert-Heizgerät Abgase von anderen Brennwert-Heizgeräten - beispielsweise aus anderen Stockwerken - sich mit der Zuluft vermischen, ist eine Rückstromsperre 34 vorgesehen, die verhindert, dass Abgase durch den Heizkessel 12 und durch den Ventilator 10 in das Gehäuse des Brennwert-Heizgerätes einströmen.

Mit dem Plus- und Minuszeichen sind die Druckverhältnisse in dem System 100 aus Brennwert-Heizgerät 1 und dem Kamin 30 dargestellt. Der Ventilator 10 zieht Frischluft über das Gehäuse des Brennwert-Heizgerätes 1 aus dem Zuluftkanal 22 und aus dem Ringspalt 31 des Kamins. Daher herrscht in dem Gehäuse 1 ein Unterdruck an Zuluft. Durch das Einblasen der Zuluft in den Heizkessel 12 über den Ventilator 10 und die dort stattfindende Verbrennung herrscht im Heizkessel 12 und in der daran dicht angeschlossenen Rohrleitung 28 sowie in der Steigleitung 32 des Kamins ein Überdruck an Abgasen. Auf Grund dieses Überdrucks ist es nicht notwendig, die Abgase über ein steigendes Rohr abzuführen. Ein thermischer Auftrieb wird nicht mehr benötigt. Die Abgase werden quasi durch den Ventilator 10 abwärts durch die Rohrleitung 28 in die Steigleitung 32 des Kamins 30 gepumpt. Gleichzeitig läuft das anfallende Kondensat rein schwerkraftbedingt über die fallend angeordnete Rohrleitung in die Steigleitung 32 ab. Teure und wartungsanfällige Kondensatpumpen können somit vermieden werden. Gleichfalls ist es nicht notwenig im Brennwert-Heizgerät die Abgase aufwendig nach oben abzuführen. Das Brennwert-Heizgerät 1 kann daher kleiner oder, bei identischen Abmessungen, leistungsstärker ausgeführt werden.

Die Rohrleitung 28 weist bevorzugt ein Gefälle von 1° - 10°, noch bevorzugter von 2° - 5° und in einer speziellen Ausführungsform von 3° auf. Auf Grund dieses Gefälles kann sich kein Kondensat stauen. Dadurch ist es ebenfalls möglich, falls in einem Stockwerk kein Brennwert-Heizgerät 1 angeschlossen ist, die fallend angeordnete Rohrleitung 28 mit einem Deckel zu verschließen, wobei durch die fallende Anordnung sichergestellt ist, dass sich hier kein Kondensat ansammeln kann. Zusätzlich sollte auch der Zuluftkanal 22 verschlossen werden, damit die vorgewärmte Zuluft nicht unerwünscht ausströmt oder Raumluft angesaugt wird.

Die Rückstromsperre 34 ist bevorzugt als eine kleine Rückschlagmembran aus Silikon im Ansauggeräuschdämpfer des Ventilators 10 ausgeführt. Falls notwendig kann eine zweite Rückstromsperre 34 hinter der ersten Rückstromsperre 34 angeordnet werden, um bei einem Defekt der Membran kein Abgas in die Zuluft einzuleiten. Bei raumluftunabhängigen Geräten ist ein Abgasaustritt aus dem Kessel in den Aufstellraum jedoch auch bei einem Defekt der Membran ausgeschlossen, da das Kesselgehäuse samt Zuluftzufuhr luftdicht ausgeführt ist.

Wie in Fig. 2 schematisch zu sehen, ist das Brennwert-Heizgerät 1 durch die unterseitige Abgasführung sehr gut für den Kaminkehrer zugänglich. Eine Revisionsöffnung, die in der Rohrleitung 28 und dem Zuluftkanal 22 vorhanden ist, befindet sich in Arbeitshöhe und muss nicht mehr mit Leitern oder Stühlen erreicht werden. Dadurch erhöht sich die Servicefreundlichkeit und Kontrollarbeiten können in einer ergonomischen Höhe durchgeführt werden. Ebenfalls wird die Montage des Brennwert-Heizgerätes 1 an der Wand und der Anschluss an dem Kamin 30 erleichtert.

Grundsätzlich kann das Brennwert-Heizgerät 1 in jeder beliebigen Höhe an einer Wand befestigt werden. Durch den nach unten weisenden kombinierten Abgas- und Kondensatauslass, durch die bauartbedingte kleinere Baugröße und durch den fehlenden zusätzlichen Anschluss an das Abwassersystem lässt sich das Brennwert-Heizgerät 1 wesentlich besser in Möbelstücke integrieren als herkömmliche Brennwert-Heizgeräte.

Das Brennwert-Heizgerät 1 eignet sich insbesondere für System 100, bei denen mehrere Brennwert-Heizgeräte (beispielsweise für jedes Stockwerk oder für jede Wohnung eines) an einem gemeinsamen Kamin 30 angeschlossen sind. Dann wird das anfallende Kondensat aller Brennwert-Heizgeräte in die Steigleitung 32 eingeleitet und kann durch einen großen Siphon am Kaminsockel gefangen und der Neutralisation zugeführt werden. Dadurch dass mehrere Brennwert-Heizgeräte ihr Kondensat in die Steigleitung 32 einleiten, verringert sich die Gefahr, dass der Siphon trocken fällt. Zusätzlich kann auch Regen und Schnee in die Steigleitung 32 eindringen und hilft dies ebenfalls zu vermeiden.

Das Brennwert-Heizgerät 1 an sich braucht keinen separaten Siphon für die Kondensatabführung. Ebenfalls wird keine Kondensatpumpe benötigt.

Durch die fallende Anordnung der Rohrleitung 28 kann zusätzlich Wasser, das in gewissen Situationen an einem Überdruckventil des Heizkreislaufs anfällt, abgeleitet werden. Bevorzugt wird hierzu das an dem Überdruckventil anfallende Wasser, in die Kondensatwanne eingeleitet und/oder über die fallende Rohrleitung 28 in die Steigleitung 32 des Kamins 30 abgeführt.

### Bezueszeichenliste:

- 1: Brennwert-Heizgerät
- 10: Ventilator
- 12: Heizkessel
- 13: Wärmetauscher
- 14: Siphon
- 16: Kondensatleitung mit Siphon
- 18: interne Abgasführung
- 20: Rohrleitung
- 22: Zuluftkanal
- 24: Kondensatwanne
- 26: Auslass
- 28: fallend angeordnete Rohrleitung
- 30: Kamin
- 31: Ringspalt
- 32: Steigleitung
- 100: System

## Patentansprüche

1. Brennwert-Heizgerät (1) mit Abgasvorhvleitung (28) aufweisend:
a) einen Ventilator (10) zur Zufuhr von Verbrennungsluft zu einem Heizkessel (12);
b) eine Kondensatwanne (24) mit einem nach unten mündenden Auslass (26), wobei der Auslass (26) gleichzeitig Auslass für anfallendes Kondensat als auch Auslass für Abgase ist; und
c) wobei die Abgasvohrleitung (28) an den Auslass (26) und fallend angeordnet ist die an der Unterseite aus dem Brennwert-Heizgerät (1) austritt und zwischen dem Auslass (26) der Kondensatwanne (24) und einer Steigleitung (32) eines Kamins (30) eines Gebäudes angeordnet werden kann, für die gemeinsame Abgas- und Kondensatführung vom Brennwert-Heizgerät (1) zum Kamin (30), wobei das Kondensat schwerkraftbedingt durch die fallend angeordnete Abgasvohrleitung (28) in den Kamin eines Gebäudes (30) läuft und eine eigene Leitung für Kondensat eingespart werden kann.

2. Brennwert-Heizgerät gemäß Anspruch 1, wobei Abgasvohrleitung (28) ein Gefälle von 1° - 10°, bevorzugt von 2° - 5° und noch bevorzugter von im Wesentlichen 3° aufweist.

3. Brennwert-Heizgerät gemäß einem der vorherigen Ansprüche, wobei die Kondensatwanne (24) im Wesentlichen symmetrisch geformt ist und der Auslass (26) für Kondensat und Abgas im Wesentlichen zentrisch in der Kondensatwanne (26) angeordnet ist.

4. Brennwert-Heizgerät gemäß einem der vorherigen Ansprüche wobei das Kondensat direkt ohne einen Siphon (14) und ohne eine Kondensatpumpe in die Steigleitung (32) des Kamins (30) abläuft.

5. Brennwert-Heizgerät gemäß einem der vorherigen Ansprüche, wobei die Kondensatwanne (24) und die fallend angeor ete Abgasvohrleitung (28) aus einem säurebeständigen Kunststoff, bevorzugt PVDF, bestehen.

6. Brennwert-Heizgerät gemäß einem der vorherigen Ansprüche, weiterhin aufweisend mindestens eine Rückstromsperre (34) für die Zuluft zur Verhinderung der Vermischung von Abgas und Zuluft bei abgeschaltetem Brennwert-Heizgerät (1).

7. Brennwert-Heizgerät gemäß einem der vorherigen Ansprüche, wobei an einem Überdruckventil anfallendes Wasser aus dem Heizkreislauf in die Kondensatwanne (24) und/oder die fallende Abgasvohrleitung (28) eingeleitet wird und in die Steigleitung (32) des Kamins (30) abgeführt wird.

8. System (100) aus mindestens einem Brennwert-Heizgerät (1) gemäß einem der vorherigen Ansprüche und einem Kamin (30), wobei der Kamin (30) eine Steigleitung (32) aus einem säurebeständigen Kunststoffmaterial aufweist und als Gegenstrom-Wärmetauscher zur Erwärmung der Zuluft des Brennwert-Heizgeräts (1) ausgeführt ist.

9. System gemäß Anspruch 8, weiterhin aufweisend einen gemeinsamen Siphon für das Kondensat aller an die Steigleitung (32) angeschlossenen Brennwert-Heizgeräte (1), wobei der Siphon am unteren Ende der Steigleitung (32) angeordnet ist.

## Claims

1. Calorific value heater (1) with an exhaust gas pipe (28), comprising:
a) a fan (10) for the supply of combustion air to a boiler (12);
b) a condensate pan (24) with an outlet (26) that opens downwards, wherein the outlet (26) is simultaneously outlet for occurring condensate as well as outlet for exhaust gases; and wherein
c) the exhaust gas pipe (28) is arranged at the outlet (26) in an declining manner, wherein the exhaust gas pipe (28) extends from the bottom side of the calorific value heater (1) and can be arranged between the outlet (26) of the condensate pan (24) and a rising pipe (32) of a chimney (30) of a building, for the simultaneous conduction of exhaust gas and condensate from the calorific value heater (1) to the chimney (30), wherein the condensate runs through the decliningly arranged exhaust gas pipe (28) due to gravity into the chimney (30) of a building and a separate pipe for the condensate can be spared.

2. Calorific value heater according to claim 1, wherein the exhaust gas pipe (28) comprises a decline of 1° to 10°, preferably 2° to 5° and more preferably of essentially 3°.

3. Calorific value heater according to one of the preceding claims, wherein the condensate pan (24) is substantially formed symmetrically, and the outlet (26) for condensate and exhaust gas is essentially arranged centrically in the condensate pan (26).

4. Calorific value heater according to one of the preceding claims, wherein the condensate drains off directly without a siphon (14) and without a condensate pump into the rising pipe (32) of the chimney (30).

5. Calorific value heater according to one of the preceding claims, wherein the condensate pan (24) and the decliningly arranged exhaust gas pipe (28) consist of an acid-resistant polymer, preferably PVDF.

6. Calorific value heater according to one of the preceding claims, further comprising at least one non-return valve (34) for intake air for preventing the mixing of exhaust gas and intake air, when the calorific value heater (1) is switched off.

7. Calorific value heater according to one of the preceding claims, wherein water that occurs at a pressure relief valve is conducted from the heating circuit into the condensate pan (24) and/or into the declining exhaust gas pipe (28) and is dumped into the rising pipe (32) of the chimney (30).

8. System (100) consisting of at least one calorific value heater (1) according to one of the preceding claims and a chimney (30), wherein the chimney (30) comprises a rising pipe (32) made of an acid-resistant polymer material and is realized as counter-current heat exchanger for heating the intake air of the calorific value heater (1).

9. System according to claim 8, further comprising a combined siphon for the condensate of all calorific value heaters (1) that are connected to the rising pipe (32), wherein the siphon is arranged at the lower end of the rising pipe (32).

## Revendications

1. Appareil de chauffage à condensation (1) présentant une tuyauterie à fumées (28) et comportant :
a) un ventilateur (10) d'alimentation en air de combustion vers une chaudière (12) ;
b) un bac à condensats (24) présentant une sortie (26) débouchant vers le bas, la sortie (26) étant simultanément la sortie pour les condensats qui en résultent et la sortie pour les fumées ; et
c) la tuyauterie à fumées (28) étant agencée à la sortie (26) et en descente, qui sort de l'appareil de chauffage à condensation (1) du côté inférieur et qui est susceptible d'être agencée entre la sortie (26) du bac à condensats (24) et un conduit ascendant (32) d'une cheminée (30) d'un bâtiment pour la conduite commune des fumées et des condensats depuis l'appareil de chauffage à condensation (1) jusqu'à la cheminée (30), les condensats s'écoulant par gravité à travers la tuyauterie à fumées (28), agencée en descente, jusque dans la cheminée d'un bâtiment (30), tout en permettant de se passer d'un conduit propre aux condensats.

2. Appareil de chauffage à condensation selon la revendication 1, dans lequel la tuyauterie à fumées (28) présente une pente de 1° à 10°, de préférence de 2° à 5°, de manière particulièrement préférée essentiellement de 3°.

3. Appareil de chauffage à condensation selon l'une des revendications précédentes, dans lequel le bac à condensats (24) est essentiellement de forme symétrique et la sortie (26) pour les condensats et pour les fumées est agencée essentiellement au centre dans le bac à condensats (26).

4. Appareil de chauffage à condensation selon l'une des revendications précédentes, dans lequel les condensats s'écoulent directement dans le conduit ascendant (32) de la cheminée (30), sans siphon (14) ni pompe à condensats.

5. Appareil de chauffage à condensation selon l'une des revendications précédentes, le bac à condensats (24) et la tuyauterie à fumées (28) agencée en descente sont constitués d'une matière plastique résistante aux acides, de préférence en PVDF.

6. Appareil de chauffage à condensation selon l'une des revendications précédentes, comportant en outre au moins un dispositif de blocage anti-retour (34) pour l'air frais en vue d'empêcher le mélangeage des fumées et de l'air frais lorsque l'appareil de chauffage à condensation (1) est mis à l'arrêt.

7. Appareil de chauffage à condensation selon l'une des revendications précédentes, dans lequel l'eau accumulée au niveau d'une valve de surpression et provenant du circuit de chauffage est introduite dans le bac à condensats (24) et/ou dans la tuyauterie à fumées (28) en descente et elle est évacuée dans le conduit ascendant (32) de la cheminée (30).

8. Système (100) constitué d'au moins un appareil de chauffage à condensation (1) selon l'une des revendications précédentes et d'une cheminée (30), la cheminée (30) comprenant un conduit ascendant (32) constitué d'une matière plastique résistante aux acides et étant réalisée sous forme d'échangeur de chaleur à contre-courant pour chauffer l'air frais de l'appareil de chauffage à condensation (1).

9. Système selon la revendication 8, comprenant en outre un siphon commun pour les condensats de tous les appareils de chauffage à condensation (1) branchés au conduit ascendant (32), le siphon étant agencé à l'extrémité inférieure du conduit ascendant (32).
